# EUROPEAN PATENT SPECIFICATION

(11) **EP 3 441 242 B1**
(45) Date of publication and mention of the grant of the patent: **17.11.2021**
(21) Application number: 18169831.7
(22) Date of filing: 27.04.2018
(51) Int. Cl.: B60D 1/06, B60D 1/62, B60D 1/44, B60D 1/24

(54) **MOVABLE TOW BAR ASSEMBLY**
BEWEGLICHE SCHLEPPSTANGENANORDNUNG
ENSEMBLE DE BARRE DE REMORQUAGE MOBILE

(30) Priority: 05.05.2017 NZ 17731643
(43) Date of publication of application: 13.02.2019
(73) Proprietor: Tiainen Projects Pty Ltd, Holland Park, QLD 4121 (AU)
(72) Inventor: Tiainen, Richard, Holland Park, Queensland 4121 (AU)
(74) Representative: Lemcke, Brommer & Partner Patentanwälte Partnerschaft mbB

(56) References cited:
- WO-A1-2016/070245
- US-A- 3 178 203
- US-B1- 8 091 913

## Description

### FIELD OF THE INVENTION

The invention relates to a movable tow bar assembly. In particular, the invention relates, but is not limited, to a tow bar which moves relative to a vehicle to provide a user with increased manoeuvrability and/or control.

### BACKGROUND TO THE INVENTION

Reference to background art herein is not to be construed as an admission that such art constitutes common general knowledge.

Tow bars, also known as a tow or trailer hitch, are commonly used to connect a towing vehicle to a trailer, or the like. Typical standard tow bars used by consumers have an extension member with a tow ball. The tow ball can be received by a coupling on the trailer which securely connects the two together while allowing limited relative movement. Another towing attachment system uses a hook and ring and operates in a similar manner.

The driver of a towing vehicle can often find it difficult to manoeuvre a towed trailer. This is particularly the case when travelling in reverse, where the trailer precedes the driven vehicle. Notably, turning the driven vehicle in a particular direction results in the trailer tending towards the opposite direction. Even for experienced drivers this behaviour can present significant manoeuvrability challenges. This can reduce safety, increase time taken, increase frustration, and/or result in an accident that causes damage to the vehicle, trailer, environment, and/or injuries to nearby people.

US3178203 describes a trailer steering mechanism where the towing vehicle is equipped with a transversally movable towbar for effectuating the steering of a trailer.

US8091913 describes an adjustable trailer hitch assembly where the trailer hitch ball is laterally movable along a horizontal tube assembly, that is fixedly secured onto a vehicle.

WO2016/070245 describes a movable tow bar that is operable to move a tow ball from side to side in order to assis with manoeuvring a towed vehicle such as a trailer. The tow bar is moved using a hydraulic cylinder.

### SUMMARY OF INVENTION

In one aspect, the invention provides a movable tow-bar assembly comprising:
an elongate frame configured to be attached to a vehicle; and
a towing attachment comprising a sleeve, the sleeve being shaped to receive a section of the elongate frame and allow translation of the towing attachment along a length of the frame;
a driving arrangement coupled with the sleeve and the frame for translational movement of the towing attachment along the length of the frame.

The tow-bar assembly further comprises a fastening arrangement including one or more fasteners for fastening the sleeve to the sliding member. The fastening arrangement comprises a plurality of bolt holes provided in the sliding member, said bolt holes extending in a transverse direction relative to the frame for receiving corresponding bolts therethrough and fastening the sleeve onto the sliding block positioned in the elongate slot.

This allows the towing attachment to be removed easily by removing the bolts and sliding the towing attachment out of the elongate frame.

In an embodiment, the sleeve comprises a C-shaped member that is shaped to receive a section of the elongate frame in an internal space defined by the C-shaped member for supporting the towing attachment and allowing the towing attachment to translate along a length of the frame.

In an embodiment, end portions of the C-shaped member comprise opposed lips for preventing the sleeve from being detached from the frame when a towing force is applied to the sleeve in a transverse direction relative to the frame.

In an embodiment, the C shaped member comprises spaced apart plates to be arranged adjacently relative to opposed outer walls of the elongate frame, said spaced apart plates being connected by a transverse plate for defining the internal space therebetween to receive the section of the elongate frame. Preferably, the spaced apart plates and the transverse plate are welded to each other.

In an embodiment, the driving arrangement comprises a drive motor coupled to the sleeve for driving the towing attachment along the length of the frame.

In an embodiment, the drive motor transmits power to the sleeve by a worm gear coupled to the sleeve.

In an embodiment, the worm gear is disposed in an internal cavity defined by walls of the elongate frame, the worm gear extending between two opposed end portions of the elongate frame.

In an embodiment, the assembly comprises a sliding member positioned in a hollow elongate slot extending along the length of the elongate frame. The sliding member is configured to be fastened to the towing attachment thereby allowing movement of the towbar attachment along the length of the frame.

Preferably, the sliding member is coupled to the worm gear.

In an embodiment, the sliding member comprises a sliding block having a transversely extending worm gear connector.

Preferably, the sliding member comprises two opposed walls wherein a first plurality of bolt holes is provided on a first of the opposed walls and a second plurality of opposed walls is provided on a second of the opposed walls.

In an embodiment, the opposed walls of the C-shaped member each comprise a respective plurality of bolt holes that correspond to the plurality of bolt holes of the sliding member for receiving said bolts and allowing the C-shaped member to be bolted to the sliding member during use.

In an embodiment, the tow-bar attachment further comprises an outwardly extending tongue portion to receive a tow-ball thereon, the tongue portion being preferably welded to the sleeve.

In an embodiment, a reinforcing member extends between an upstanding wall of the sleeve and the outwardly tongue portion.

In an embodiment, the assembly comprises a connector for attaching the elongate frame to a tow-bar receiving socket of the vehicle, the connector being positioned to be substantially equidistant from the opposed ends of the elongate frame.

In an embodiment, the assembly further comprises one or more gusset members extending between the elongate frame and the connector.

In an embodiment, the assembly further comprises a locking arrangement for locking the position of the towing attachment relative to the elongate frame at a pre-determined location.

Preferably, the locking arrangement comprises one or more locking pins adapted to be received into respective locking apertures provided along an outer wall of the elongate frame such that in a locked position, the locking pins are received in respective locking apertures to prevent movement of the towing attachment relative to the elongate frame.

In an embodiment, the assembly further comprises a control module coupled with the actuator, the control module comprising a user input interface for receiving user input and controlling the movement of the towing attachment relative to the elongate frame.

In an embodiment, the control module is arranged for wireless control of the drive motor.

A movable tow bar may alternatively comprise:
a frame configured to be mounted to a vehicle;
a towing attachment connected to the frame; and
an actuator coupled to the towing attachment;
wherein the towing attachment is movable relative to the frame and actuation of the actuator moves the towing attachment towards a side of the vehicle.

A movable tow bar may alternatively comprise:
a frame configured to be mounted to a vehicle;
an extension member connected to the frame;
a towing attachment located on the extension member; and
an actuator coupled to the extension member such that the actuator can move the extension member relative to the frame.

Preferably the actuator moves the extension member in a substantially horizontal plane. Preferably the extension member rotates relative to the frame. Preferably the extension member rotates around a vertical axis. In a preferred form the extension member pivots around a pivot pin that connects the extension member to the frame. Preferably the extension member is an elongate member having a longitudinal axis. Preferably the longitudinal axis of the elongate member is located in the substantially horizontal plane.

The movable tow bar assembly may further comprise a locking assembly. The locking assembly preferably prevents movement between the frame and the towing attachment. In any embodiment the locking assembly prevents movement between the frame and the towing attachment by preventing movement between the frame and the extension member. In a preferred form the locking assembly comprises a locking pin. Preferably the locking pin is received in corresponding locking apertures of the frame and the extension member.

The actuator may comprise a hydraulic cylinder, a pneumatic cylinder, an electric motor, and/or a gearbox. In a preferred form the actuator comprises a hydraulic cylinder. Preferably the hydraulic cylinder is connected to the extension member. Preferably the actuator is powered. Preferably the actuator is configured to be powered by the vehicle.

Preferably the extension member has two opposed ends. Preferably the hydraulic cylinder is connected at or adjacent a first end. Preferably the towing attachment is located at or adjacent a second end. Preferably the extension member is connected to the frame, e.g. by a pivot pin, between the hydraulic cylinder connection and the towing attachment.

The movable tow bar assembly may further comprise a controller. Preferably the controller operates the actuator. The controller may signal the actuator wirelessly or, alternatively, the controller may signal the actuator electrically over wires or even mechanically. The controller preferably has an interface with controls that an operator can use to direct the actuator. Preferably the controller has one or more sensors and directs the actuator in response to measurements from the one or more sensors.

Preferably the towing attachment comprises a tow ball. Alternatively, the towing attachment may comprise a different type of towing attachment such as, for example, a tow ring. The towing attachment may be movable within a track of the extension member.

In an alternative embodiment, there may be no extension member and the towing attachment may be movable within a track of the frame. The track preferably comprises a channel. The channel may be any suitable shape but is preferably substantially linear. The channel preferably extends substantially perpendicularly to a towing axis. The towing attachment is preferably movable in the channel by an actuator. The actuator may comprise an electric motor. The actuator preferably converts rotational movement of the motor into non-rotational movement, such as linear movement. The actuator may comprise a worm drive.

In an alternative embodiment, the towing attachment may be movable across a rail. Preferably the rail is substantially cylindrical. Preferably the towing attachment is mounted to a sleeve. Preferably the sleeve has a channel that corresponds to the shape of the rail. Preferably the sleeve is slidably mounted on the rail. Preferably the sleeve substantially surrounds a portion of the rail. Preferably the sleeve is movably connected to the rail via a fluid actuated cylinder.

Preferably the frame comprises a hollow member. Preferably the hollow member comprises a rectangular hollow section (RHS). Preferably the actuator comprises a hydraulic cylinder and the hollow member of the frame contains a hydraulic reservoir and/or a hydraulic pump.

In another form, there is provided a method of manoeuvring a trailer connected to a movable tow bar of a vehicle, the method comprising the steps of:
operating a controller;
actuating an actuator according to operation of the controller; and
moving a towing attachment, to which the trailer is connected, with the actuator; wherein the towing attachment is moved towards a side of the vehicle.

Preferably the movable tow bar assembly is mounted to a rear end of the vehicle and the controller is operated from inside the vehicle. Preferably the controller is operated by a user of the vehicle. Preferably the towing attachment is moved in a substantially horizontal plane by the actuator. In a preferred form the towing attachment is moved substantially perpendicularly to a towing axis. Further features and advantages of the present invention will become apparent from the following detailed description.

### BRIEF DESCRIPTION OF THE DRAWINGS

By way of example only, preferred embodiments of the invention will be described more fully hereinafter with reference to the accompanying figures, wherein:
Figure 1 illustrates a first frontal perspective view of a movable tow-bar assembly 200 in accordance with an embodiment of the invention;
Figure 2 illustrates a side perspective view of the movable tow-bar assembly 200;
Figure 3 illustrates a second frontal perspective view of a movable tow-bar assembly 200;
Figure 4 illustrates a side view of the towing attachment 220;
Figure 5 illustrates a top perspective view of the towing attachment 220 which forms a part of the tow bar assembly 200;
Figure 6 illustrates a bottom perspective view of the towing attachment 220;
Figure 7 illustrates a side-perspective view of the towing attachment 220;
Figure 8 is a first top perspective view of an elongate frame 210 which forms a part of the towbar assembly 200;
Figure 9 is a top view of the elongate frame 210;
Figure 10 is an enlarged top view of the elongate frame 210;
Figure 11 is a rear view of the elongate frame 210.
Figure 12 is a sectional view of the movable tow-bar assembly 200.
Figure 12A is a perspective view of the sliding block 260 that forms a part of the tow bar assembly 200.
Figure 13 illustrates a diagrammatic plan view of a movable tow bar assembly 10 according to a second embodiment;
Figure 14 illustrates a diagrammatic plan view of the movable tow bar assembly of an alternative embodiment;
Figure 15 illustrates a perspective view of a movable tow bar assembly of another embodiment;
Figure 16 illustrates a side view of the movable tow bar assembly of the embodiment shown in Figure 15; and
Figure 17 illustrates a top plan view of the movable tow bar assembly illustrated in figure 15 in various different positions.

### DETAILED DESCRIPTION OF THE DRAWINGS

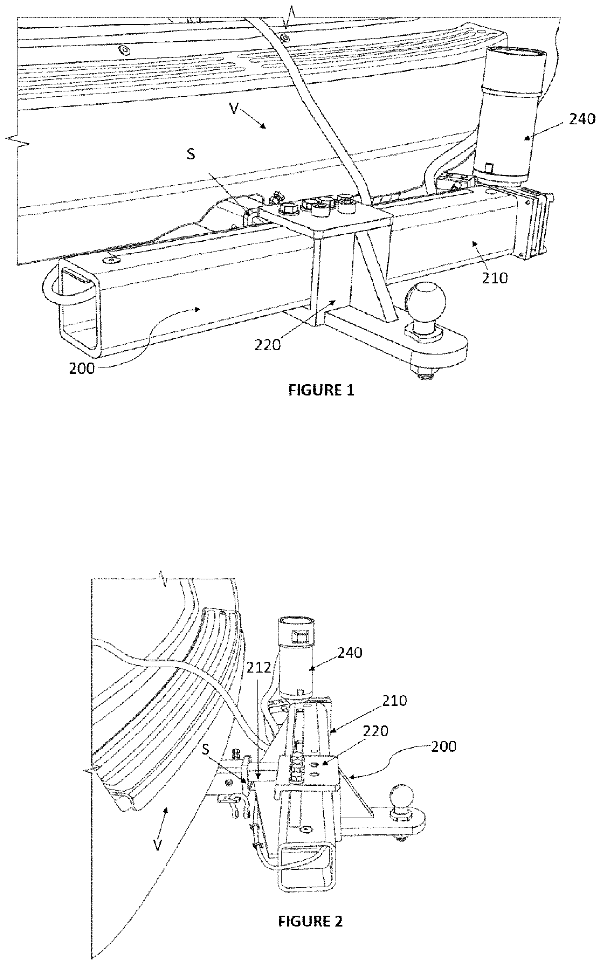

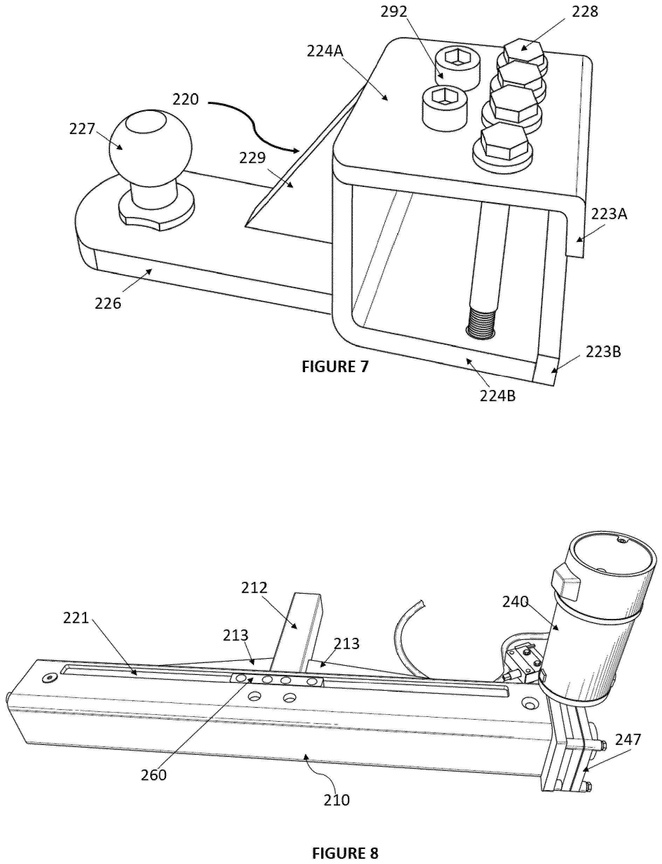

Figures 1 to 3 illustrate the tow bar assembly 200 in an installed position whereby the tow-bar assembly 200 has been installed on a vehicle V. Specifically, the tow-bar assembly 200 comprises a tubular elongate frame 210 which is attached to a tow-bar receiving socket (S) of the vehicle V such that the elongate frame 210 extends in lateral direction relative to a direction of motion of the vehicle V. The elongate frame 210 includes a connector 212 that is welded to an outer wall of the elongate frame 210 and extends in a generally perpendicular direction from the main body of the elongate frame 210. The connector 212 is provided in the form of a square shaped tube that is configured for being received into the socket S having a complementary configuration. The socket S may take the form of a conventional tow-bar socket which is typically coupled with the chassis of the vehicle V. A securing arrangement for securing the connector 212 within the socket S may also be provided to prevent the connector 212 (and the elongate frame 210) from inadvertently becoming uncoupled from the socket S during use. Substantially triangular gusset members 213 (shown in Figures 8 to 10) are also welded to the walls of the connector 212 and the rear wall of the elongate frame 210 for reinforcing the welded connection between the connector 212 and the elongate frame 210.

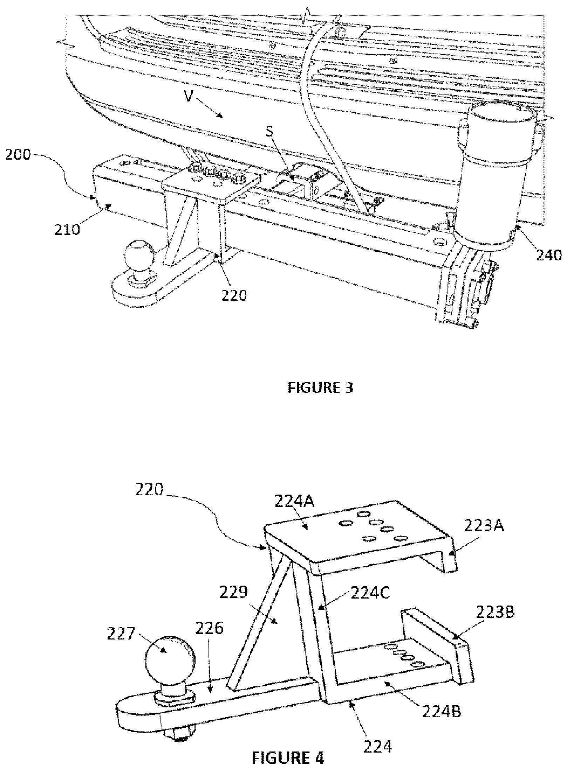

The tow-bar assembly 200 also comprises a movable towing attachment 220 which is configured to slide along a length of the elongate frame 210. Referring to Figures 4 to 7, the towing attachment 220 comprises a C-shaped sleeve member 224 that is shaped to receive a section of the elongate frame in an internal space defined by the C-shaped member 224. The C shaped member 224 comprises spaced apart and mutually opposed plates 224A and 224B which are spaced apart and welded to a transversely arranged connecting plate 224C so that during use inner walls of the spaced apart plates 224A and 224B can be arranged adjacently relative to opposed outer walls of the elongate frame 210 in order to support the towing attachment 220 and allow the towing attachment 220 to translate over the length of the elongate frame 210. The spaced apart plates 224A and 224B include corresponding lip portions 223A and 223B that are provided in a mutually opposed configuration to prevent the towing attachment 220 from being detached from the elongate frame 210 when a towing force is applied in a transverse direction relative to the elongate frame 210.

The towing attachment 220 also includes an outwardly extending tongue portion 226 that allows a tow ball 227 to be mounted thereon. A reinforcing member 229 extending between the tongue portion 227 and the transverse connecting plate 224C is provided for reinforcing the welded connection between the tongue 226 and the C-shaped sleeve member 224. In the presently described embodiment, the outwardly extending tongue portion 226 is welded onto the transverse connecting plate 224C to be substantially in alignment with one of said spaced apart plates 224A and 224B. Such a configuration of the towing attachment 220 allows the towing attachment to be inverted and positioned along the fixed elongate frame 210 in order to vary the height of the tongue portion (which supports the tow ball 227). Specifically, in a first in-use configuration, the tongue portion 226 is positioned at a higher elevation relative to the supporting surface for the vehicle. In a second in-use configuration, the tongue portion 226 is positioned at a relatively lower elevation. In further improvements, the tongue portion 226 may be modified to allow the position of the tongue portion 226 to be movably adjusted along various mounting locations along the transverse connecting plate 224C without departing from the spirit and scope of the invention. It is important to note that after the towing attachment 220 is inverted, the towball 227 needs to be uncoupled from the tongue portion 226 (preferably by using a fastening nut of the towball) and re-positioned so that the towball 227 is mounted on the tongue portion 226 in an upwardly facing configuration.

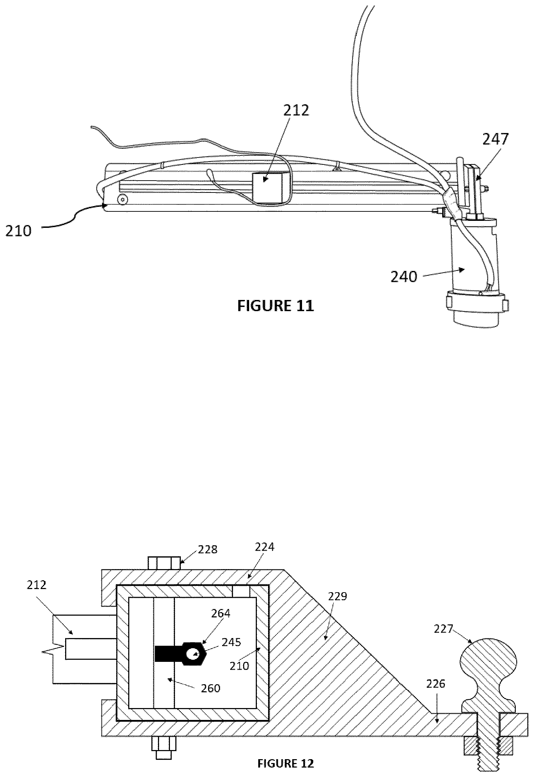

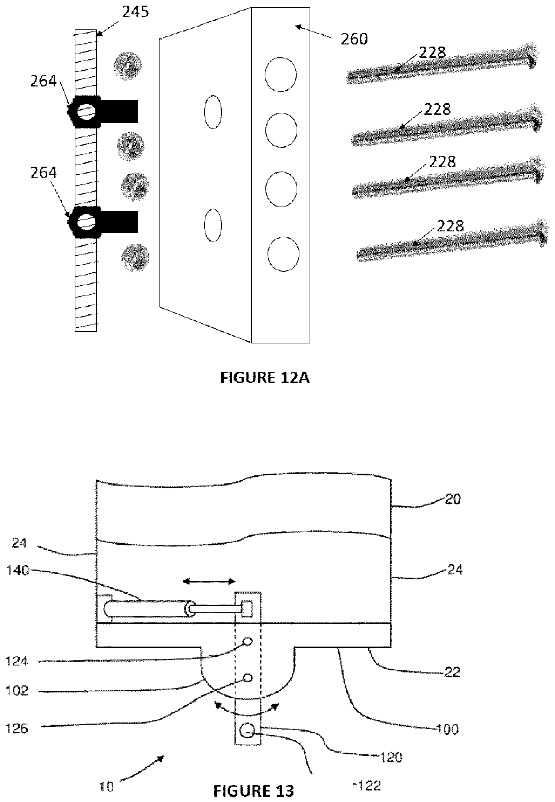

The towing attachment 220 is removably fastened to a sliding block 260 (clearly visible in Figures 8 to 10) that is positioned within an internal cavity defined by the walls of the elongate frame 210. During use, the spaced apart plates 224A and 224B of the C-shaped member 224 are bolted onto the sliding block 260. Specifically, the sliding block 260 is provided with bolt holes 262 that extend in a transverse direction relative to the elongate frame 210 and correspond with bolt holes 223 provided along each of the spaced apart plates 224A and 224B. Fastening bolts 228 (visible in Figures 7 and 12A) are provided for fastening the towing attachment 220 with the sliding block 260 which in turn allows the towing attachment 220 to slide along the elongate frame 210 whilst being attached to the sliding block 260. The provision of the fastening bolts 228 also allows the bolts 228 to be removed in order to remove the towing attachment 220 relatively easily by sliding the towing attachment out of the elongate frame 210.

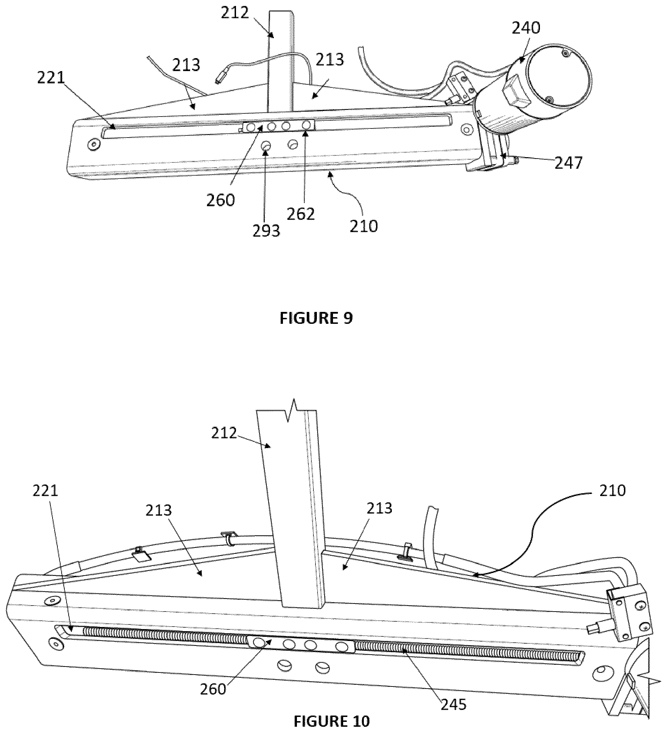

The sliding block 260 that is positioned within the housing of the elongate frame 210 is driven by a drive motor 240. A top portion and a bottom portion of the sliding block 260 is accessible from an elongate slot 221 that is provided along a top and bottom wall of the elongate frame 210. The provision of the elongate slot along each of the top and bottom wall of the elongate frame 210 allows the spaced apart plates 224A and 224B to be fastened onto the top and bottom portions of the sliding block 260 and allows the towing attachment 220 to be fastened onto the sliding block 260. The sliding block 260, when bolted to the towing attachment 220, allows power to be transmitted from the drive motor to the towing attachment 220. A worm gear drive 245 (shown clearly in Figure 10) is coupled with the drive motor 240 for driving the sliding block 260 (which is fastened to the towing attachment 220). Hexagonal nuts 264 (Figure 12 and 12A) are provided for transferring drive from the worm gear drive 245 to the sliding block 260. The hexagonal head portion of the nuts 264 include an opening for threadedly receiving the worm gear drive 245 (best shown in Figures 12 and 12A). The shank portion of the nut 264 is fastened onto a side wall of the sliding block 260 (shown clearly in Figure 12). Consequently, during use, any movement of the worm gear 245 results in translation of the sliding block 260 along the length of an elongate cavity defined by the walls of the elongate frame 210. The towing attachment 220, when fastened to the sliding block 260 also moves along a length of the elongate frame 210.

The motor 240 may be controllable by, for instance, a controller mounted along the elongate frame 210 which may include conventional switches and/or buttons, as known by one of ordinary skill in the art. Alternatively, a plug receptacle could be replaced with a receiver of electromagnetic signals (not shown), and controller could be replaced with a remote control (not shown) that emits electromagnetic signals for controlling the motor 240.

The towing assembly 200 also includes a bracket assembly provided within the elongate frame 210 for mounting the worm gear drive 245 within the internal space defined by the walls of the tubular elongate frame 210 such that the worm gear 245 extends between two lateral ends of the elongate frame 210. Plate guides and bearing plates 247 may be provided at either lateral end of the housing defined by the walls of the elongate frame 210 for supporting the worm gear 245. The plates and bearing for positioning the worm gear 245 may be used with any suitable fasteners, such as bolts, to permit disassembly and service of internal components, or may be permanently affixed within the elongate frame 210 via welding, etc., where disassembly is not required.

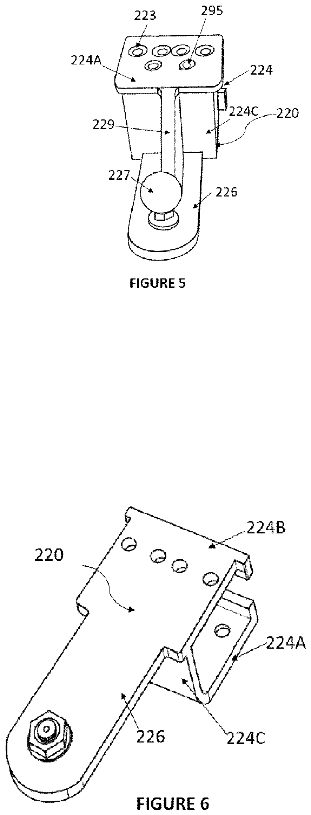

A locking arrangement is also provided for optionally locking the position of the towing attachment 220 relative to the elongate frame 210 at a substantially central location relative to the elongate frame 210. Specifically, two locking pins 292 (shown in Figure 7) are adapted to be received into respective locking apertures (shown in Figures 9 and 10) provided along an outer top wall of the elongate frame 210 and corresponding locking apertures 295 (shown in Figure 5) positioned along the spaced apart plate 224A (or 224B). In a locked position, the locking pins 292 are received in the respective locking apertures 293 and 295 provided in the elongate frame 220 and the attachment member 220 and prevent movement of the towing attachment 220 relative to the elongate frame 210.

Advantageously, the configuration of the towing attachment 220 in combination with the elongate frame 210 in combination with the driving arrangement allows the towbar assembly to function like a normal tow bar during usual towing. However, the driving arrangement (including the drive motor 240 in combination with the worm gear 245 and the sliding block 260 fastened to the towing attachment 220) allows translational movement of the towing attachment 220 along a length of the elongate frame 210. The provision of the aforementioned configuration provides additional control over a towed vehicle during difficult manoeuvres, such as when reversing the vehicle V. The additional control over the towed vehicle improves safety by reducing the likelihood of the towed vehicle having a collision with either the environment or bystanders. The movable towbar assembly 200 further provides additional convenience and efficiency during difficult towing manoeuvres.

The following description is made for the purpose of better illustration but is itself not covered by the current claims.

Figure 13 illustrates a movable tow bar assembly 10 mounted to a vehicle 20 having a rear end 22 and two opposed sides 24. The movable tow bar assembly 10 has a frame 100 mounted to the rear of the vehicle 20 and an extension member 120 connected to the frame 100. The frame 100 is preferably rigidly affixed to a chassis of the vehicle 20 with a support plate 102 adjacent the extension member 120. In a preferred form a pair of support plates 102 are provided. The pair of support plates 102 are preferably aligned in spaced apart parallel planes with the extension member 120 being received between the two support plates 102. The extension member 120 has a towing attachment, in the form of a tow ball 122, at an end that is distal from the vehicle 20. In the illustrated embodiment the extension member 120 is connected to the frame 100 by a pivot pin 124. The extension member 120 also has a locking assembly in the form of a removable locking pin 126 the also connects the extension member 120 to the frame 100. The pivot pin 124 and locking pin 126 are both receivable in respective apertures in the frame 100 and the extension member 120.

The extension member 120 is also coupled to an actuator in the form of a hydraulic cylinder 140. The hydraulic cylinder 140 is connected substantially perpendicularly to a longitudinal axis of the extension member 120 such that extension and retraction of the hydraulic cylinder 140 causes the extension member to pivot around the pivot pin 124 when the locking assembly is unlocked, e.g. when the locking pin 126 is removed from the extension member 120 and/or frame 100.

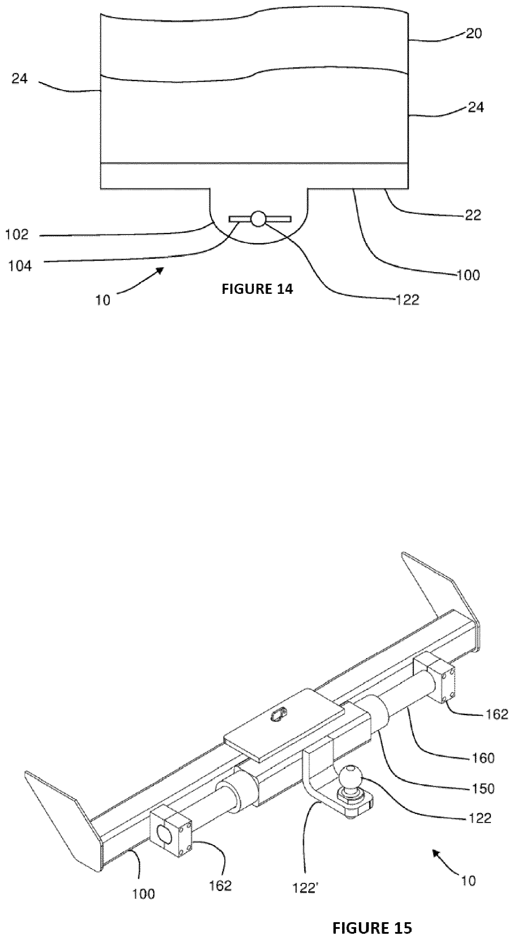

Figure 14 illustrates an alternative embodiment of a movable tow bar 10 wherein the tow ball 122 is movable within a rail in the form of a channel 104 in the frame 100. The channel 104 is substantially linear with a longitudinal axis substantially perpendicular to a towing axis. The actuator (not shown in Figure14) for this arrangement preferably includes an electric motor and gearbox. A worm drive may also be utilised. Although a straight channel 104 is illustrated in Figure 14 it will be appreciated that the channel could take other forms such as, for example, a curved channel.

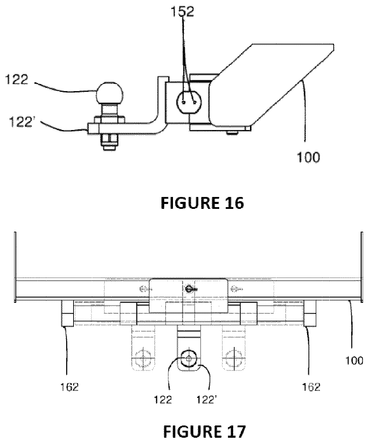

Figures 15 to 17 illustrate an alternative embodiment of a movable tow bar assembly 10 wherein the tow ball 122 is located on a sleeve 150 via bracket 122'. The sleeve 150 is slidably mounted to a rail 160. In the illustrated embodiment the rail 160 is substantially cylindrical, with the sleeve 150 having a correspondingly shaped substantially cylindrical opening of channel running therethrough. The rail 160 is contained between two end stops 162. The sleeve 150 can slide along the rail between the end stops 162 as illustrated in Figure 17.

The sleeve is connected to one end of a concealed hydraulic cylinder (not shown) and the rail is connected to another end of the hydraulic cylinder. As seen in figure 16, hydraulic ports 152 are provided to control the hydraulic cylinder. The hydraulic ports 152 can be utilised to connect the hydraulic cylinder to a hydraulic reservoir and pump. In a preferred embodiment, the reservoir and pump (not shown) are contained inside the frame 100.

In use, the movable tow bar assembly 10 of Figure 13 may be used like a normal tow bar with the extension member 120 locked such that its longitudinal axis substantially coincides with the longitudinal axis of the vehicle 20. When additional manoeuvrability is required, such as when reversing the vehicle 20 with a towed vehicle such as a trailer attached to the tow ball 122, additional control over the towed vehicle may be obtained by removing the locking pin 126 and actuating the hydraulic cylinder 140.

The hydraulic cylinder 140 is preferably controlled from a cabin of the vehicle 20, to enable a user to pivot the extension member 120 with tow-ball 122 thereon towards either the left or right side of the vehicle. The pivot movement will also bring the tow ball 122 closer to a rear of the vehicle 20. As the tow ball 122 is moved the angle between the vehicle 20 and the towed vehicle is altered. This change in angle can be used to the driver's advantage to direct the towed vehicle in a particular direction to achieve a desired path for the towed vehicle to travel.

The movable tow bar assembly 10 of Figure 14 is operated in a similar manner, with the tow ball 122 being movable with respect to the frame 100 and hence the vehicle 20. As the tow ball 122 is moved in the channel 104, the angle between the vehicle 20 and the towed vehicle is altered and, again, can be used to the driver's advantage to direct the towed vehicle in a particular direction to achieve a desired path for the towed vehicle to travel. The movable tow bar assembly 10 of figures 15 to 17 is operated in a similar manner, with the tow ball 122 being movable with respect to the frame 100 and hence the vehicle 20 by sliding the sleeve 150 across the rail 160. As a controller is operated, manually or automatically, the hydraulic cylinder slides the sleeve 150 longitudinally along the rail 160 to move the tow ball 122 towards a side of the vehicle to which the movable tow bar 10 is mounted.

Advantageously, the movable tow bar assembly 10 operates like a normal tow bar during usual towing, but allows the tow ball 122 of the tow bar 10 to be moved when desired. This provides additional control over a towed vehicle during difficult manoeuvres, such as when reversing the vehicle 20. The additional control over the towed vehicle can vastly improve safety by reducing the likelihood of the towed vehicle having a collision with either the environment or bystanders. The movable towbar assembly 10 further provides additional convenience and efficiency during difficult towing manoeuvres.

The above description of various embodiments of the present invention is provided for purposes of description to one of ordinary skill in the related art. It is not intended to be exhaustive or to limit the invention to a single disclosed embodiment. As mentioned above, numerous alternatives and variations to the present invention will be apparent to those skilled in the art of the above teaching. Accordingly, while some alternative embodiments have been discussed specifically, other embodiments will be apparent or relatively easily developed by those of ordinary skill in the art.

In this specification, the terms 'comprises', 'comprising', 'includes', 'including', or similar terms are intended to mean a non-exclusive inclusion, such that a method, system or apparatus that comprises a list of elements does not include those elements solely, but may well include other elements not listed.

## Claims

1. A movable tow-bar assembly comprising:
an elongate frame (210) configured to be attached to a tow-bar receiving socket (S) of a vehicle (V); and
a towing attachment (220) positioned on a sleeve (224), the sleeve being shaped to receive a section of the elongate frame (210) and allow translation of the towing attachment (220) horizontally along a length of the frame (210);
a sliding member (260) positioned in a hollow slot (221) extending along the length of the elongate frame (210), the sliding member (260) configured to be removably fastened to the sleeve (224);
a driving arrangement (240, 245) coupled with the sleeve (224) and the frame (210) for effecting translational movement of the towing attachment (220) along the length of the frame (210);
**characterized by**
a fastening arrangement including one or more fasteners for fastening the sleeve (224) to the sliding member (260), wherein the fastening arrangement comprises a plurality of bolt holes (262) provided in the sliding member (260), said bolt holes (262) extending in a transverse direction relative to the elongate frame (210) for receiving corresponding bolts (228) therethrough and fastening the sleeve (224) onto the sliding member (260) positioned in the hollow slot (221).

2. A movable tow-bar assembly in accordance with claim 1 wherein the sleeve (224) comprises a C-shaped member that is shaped to receive a section of the elongate frame (210) in an internal space defined by the C-shaped member for supporting the towing attachment (220) and allowing the towing attachment (220) to slide along a length of the frame (210).

3. A movable tow-bar assembly in accordance with claim 2 wherein end portions of the C-shaped member (224) comprises opposed lips (223A, 223B) for preventing the sleeve (224) from being detached from the frame (210) when a towing force is applied in a transverse direction relative to the frame (210).

4. A movable tow-bar assembly in accordance with any one of claims 2 or 3 wherein the C shaped member comprises spaced apart plates (224A, 224B) to be arranged contiguously relative to opposed outer walls of the elongate frame (210), said spaced apart plates (224A, 224B) being connected by a transverse plate (224C) for defining an internal space therebetween to receive a section of the elongate frame (210) and wherein the spaced apart plates (224A, 224B) and the transverse plate (224C) are preferably welded to each other.

5. A movable tow-bar assembly in accordance with any one of the preceding claims further comprising a drive motor (240) coupled to the sleeve (224) for driving the towing attachment (220) along the length of the frame (210).

6. A movable tow-bar assembly in accordance with claim 5 wherein the drive motor (240) transmits power to the towing attachment (220) by a worm gear (245) coupled to the sleeve.

7. A movable tow-bar assembly in accordance with claim 6 wherein the worm gear (245) is disposed in an internal cavity defined by walls of the elongate frame (210), the worm gear (245) extending between two opposed end portions of the elongate frame (210).

8. A movable tow-bar assembly in accordance with claim 1 when dependent upon claim 6
wherein the sliding member (260) is coupled to the worm gear (245) to transfer drive from the worm gear (245) to the sliding block (260).

9. A movable tow-bar assembly in accordance with claim 1 wherein opposed walls of the sleeve (224) comprise a plurality of bolt holes (223) that correspond to the bolt holes (262) of the sliding member (260) for receiving said bolts (228) and allowing the sleeve (224) to be bolted to the sliding member (260) during use.

10. A movable tow-bar assembly in accordance with any one of the preceding claims wherein the towing attachment (220) further comprises an outwardly extending tongue portion (226) to receive a tow-ball (227) thereon and wherein the tongue portion (226) is preferably welded to the sleeve (224).

11. A movable tow-bar assembly in accordance with any one of the preceding claims comprising a locking arrangement for locking the position of the towing attachment (220) relative to the elongate frame (210) at a pre-determined location wherein the locking arrangement comprises one or more locking pins (292) adapted to be received into respective locking apertures (293) provided along an outer wall of the elongate frame (210) such that in a locked position, the locking pins (292) are received in respective locking apertures (295) to prevent movement of the towing attachment (220) relative to the elongate frame (210).

## Patentansprüche

1. Bewegliche Anhängerkupplungsanordnung, umfassend:
einen länglichen Rahmen (210), der dazu konfiguriert ist, an einer Anhängerkupplungs-Aufnahme (S) eines Fahrzeugs (V) befestigt zu werden; und
eine Anhängerkupplungskonsole (220), die auf einer Manschette (224) angeordnet ist, wobei die Manschette so geformt ist, dass sie ein Profil des länglichen Rahmens (210) aufnimmt und eine Translation der Anhängerkupplungskonsole (220) waagrecht entlang einer Länge des Rahmens (210) ermöglicht;
ein Schiebeelement (260), das in einem Schiebeschlitz (221) angeordnet ist, der sich entlang der Länge des länglichen Rahmens (210) erstreckt, wobei das Schiebeelement (260) dazu konfiguriert ist, entfernbar an der Manschette (224) befestigt zu werden;
eine Antriebsanordnung (240, 245), die mit der Manschette (224) und dem Rahmen (210) gekoppelt ist, um eine Translationsbewegung der Anhängerkupplungsanordnung (220) entlang der Länge des Rahmens (210) zu bewirken;
**gekennzeichnet durch**
eine Befestigungsanordnung, die eines oder mehrere Befestigungselemente zum Befestigen der Manschette (224) an dem Schiebeelement (260) aufweist, wobei die Befestigungsanordnung eine Mehrzahl von Bolzenlöchern (262) umfasst, die in dem Schiebeelement (260) vorgesehen sind, wobei sich die Bolzenlöcher (262) in einer Querrichtung relativ zu dem länglichen Rahmen (210) erstrecken, um durch sie hindurch entsprechende Bolzen (228) aufzunehmen und die Manschette (224) auf dem in dem Schiebeschlitz (221) angeordneten Schiebeelement (260) zu befestigen.

2. Bewegliche Anhängerkupplungsanordnung gemäß Anspruch 1, wobei die Manschette (224) ein C-förmiges Element umfasst, das dazu geformt ist, ein Profil des länglichen Rahmens (210) in einem Innenraum aufzunehmen, der von dem C-förmigen Element definiert wird, um die Anhängerkupplungskonsole (220) abzustützen und es der Anhängerkupplungskonsole (220) zu ermöglichen, entlang der Länge des Rahmens (210) verschoben zu werden.

3. Bewegliche Anhängerkupplungsanordnung gemäß Anspruch 2, wobei Endteile des C-förmigen Elements (224) sich gegenüberliegende Lippen (223A, 223B) umfassen, um zu verhindern, dass sich die Manschette (224) von dem Rahmen (210) löst, wenn eine Anhängerlast in einer Querrichtung relativ zu dem Rahmen (210) angelegt wird.

4. Bewegliche Anhängerkupplungsanordnung gemäß Anspruch 2 oder 3, wobei das C-förmige Element voneinander beabstandete Platten (224A, 224B) umfasst, um anliegend an sich gegenüberliegenden Außenwänden des länglichen Rahmens (210) angeordnet zu werden, wobei die voneinander beabstandeten Platten (224A, 224B) über eine Querplatte (224C) verbunden sind, um einen Innenraum zwischen sich zu definieren, um ein Profil des länglichen Rahmens (210) aufzunehmen, und wobei die voneinander beabstandeten Platten (224A, 224B) und die Querplatte (224C) vorzugsweise miteinander verschweißt sind.

5. Bewegliche Anhängerkupplungsanordnung gemäß einem der vorhergehenden Ansprüche, ferner umfassend einen Antriebsmotor (240), der mit der Manschette (224) gekoppelt ist, um die Anhängerkupplungskonsole (220) entlang der Länge des Rahmens (210) anzutreiben.

6. Bewegliche Anhängerkupplungsanordnung gemäß Anspruch 5, wobei der Antriebsmotor (240) über eine mit der Manschette gekoppelte Schneckenwelle (245) Kraft an die Anhängerkupplungskonsole (220) überträgt.

7. Bewegliche Anhängerkupplungsanordnung gemäß Anspruch 6, wobei die Schneckenwelle (245) in einem inneren Hohlraum angeordnet ist, der durch Wände des länglichen Rahmens (210) definiert ist, wobei sich die Schneckenwelle (245) zwischen zwei gegenüberliegenden Endteilen des länglichen Rahmens (210) erstreckt.

8. Bewegliche Anhängerkupplungsanordnung gemäß Anspruch 1, wenn er von Anspruch 6 abhängig ist, wobei das Schiebeelement (260) mit der Schneckenwelle (245) gekoppelt ist, um einen Antrieb von der Schneckenwelle (245) auf den Schiebeblock (260) zu übertragen.

9. Bewegliche Anhängerkupplungsanordnung gemäß Anspruch 1, wobei sich gegenüberliegende Wände der Manschette (224) eine Mehrzahl von Bolzenlöchern (223) umfassen, die den Bolzenlöchern (262) des Schiebeelements (260) entsprechen, um die Bolzen (228) aufzunehmen und es der Manschette (224) zu ermöglichen, während der Verwendung mit dem Schiebeelement (260) verschraubt zu sein.

10. Bewegliche Anhängerkupplungsanordnung gemäß einem der vorhergehenden Ansprüche, wobei die Anhängerkupplungskonsole (220) ferner einen sich nach außen erstreckenden Ansatzteil (226) umfasst, um einen Kugelkopf (227) auf sich aufzunehmen, und wobei der Ansatzteil (226) vorzugsweise an die Manschette (224) angeschweißt ist.

11. Bewegliche Anhängerkupplungsanordnung gemäß einem der vorhergehenden Ansprüche, umfassend eine Verriegelungsanordnung zum Verriegeln der Position der Anhängerkupplungskonsole (220) relativ zu dem länglichen Rahmen (210) an einem vorbestimmten Ort, wobei die Verriegelungsanordnung einen oder mehrere Verriegelungsstifte (292) umfasst, die dazu angepasst sind, in entsprechenden Verriegelungsöffnungen (293) aufgenommen zu werden, die entlang einer äußeren Wand des länglichen Rahmens (210) vorgesehen sind, sodass die Verriegelungsstifte (292) in einer verriegelten Position in entsprechenden Verriegelungsöffnungen (295) aufgenommen sind, um eine Bewegung der Anhängerkupplungskonsole (220) relativ zu dem länglichen Rahmen (210) zu verhindern.

## Revendications

1. Ensemble de barre de remorquage mobile comprenant :
une structure allongée formant châssis de support (210) qui est configurée pour être liée à une douille de réception de barre de remorquage (S) d'un véhicule (V) ; et
un moyen de liaison de remorquage (220) qui est positionné sur un manchon (224), le manchon étant conformé pour recevoir une section de la structure allongée formant châssis de support (210) et pour permettre la translation du moyen de liaison de remorquage (220) horizontalement suivant une longueur de la structure allongée formant châssis de support (210) ;
un élément de coulissement (260) qui est positionné à l'intérieur d'une fente creuse (221) qui est étendue suivant la longueur de la structure allongée formant châssis de support (210), l'élément de coulissement (260) étant configuré pour être fixé de façon amovible sur le manchon (224) ; et
un agencement d'entraînement (240, 245) qui est couplé avec le manchon (224) et avec la structure allongée formant châssis de support (210) pour faire effectuer un mouvement de translation au moyen de liaison de remorquage (220) suivant la longueur de la structure allongée formant châssis de support (210) ;
**caractérisé par** :
un agencement de fixation qui inclut un ou plusieurs moyen(s) de fixation pour fixer le manchon (224) sur l'élément de coulissement (260), dans lequel l'agencement de fixation comprend une pluralité de trous de boulon (262) qui sont ménagés dans l'élément de coulissement (260), lesdits trous de boulon (262) étant étendus dans une direction transversale par rapport à la structure allongée formant châssis de support (210) pour recevoir des boulons correspondants (228) au travers et pour fixer le manchon (224) sur l'élément de coulissement (260) qui est positionné à l'intérieur de la fente creuse (221).

2. Ensemble de barre de remorquage mobile selon la revendication 1, dans lequel le manchon (224) comprend un élément en forme de C qui est conformé pour recevoir une section de la structure allongée formant châssis de support (210) à l'intérieur d'un espace interne qui est défini par l'élément en forme de C pour supporter le moyen de liaison de remorquage (220) et pour permettre le coulissement du moyen de liaison de remorquage (220) suivant une longueur de la structure allongée formant châssis de support (210).

3. Ensemble de barre de remorquage mobile selon la revendication 2, dans lequel des parties d'extrémité de l'élément en forme de C (224) comprennent des lèvres opposées (223A, 223B) pour empêcher que le manchon (224) ne se détache de la structure allongée formant châssis de support (210) lorsqu'une force de remorquage est appliquée dans une direction transversale par rapport à la structure allongée formant châssis de support (210).

4. Ensemble de barre de remorquage mobile selon l'une quelconque des revendications 2 ou 3, dans lequel l'élément en forme de C comprend des plaques espacées les unes des autres (224A, 224B) qui sont destinées à être agencées de façon contiguë par rapport à des parois externes opposées de la structure allongée formant châssis de support (210), lesdites plaques espacées les unes des autres (224A, 224B) étant connectées par une plaque transversale (224C) pour définir un espace interne entre elles dont l'objet est de recevoir une section de la structure allongée formant châssis de support (210) et dans lequel les plaques espacées les unes des autres (224A, 224B) et la plaque transversale (224C) sont de préférence soudées les unes aux autres.

5. Ensemble de barre de remorquage mobile selon l'une quelconque des revendications précédentes, comprenant en outre un moteur d'entraînement (240) qui est couplé au manchon (224) pour entraîner le moyen de liaison de remorquage (220) suivant la longueur de la structure allongée formant châssis de support (210).

6. Ensemble de barre de remorquage mobile selon la revendication 5, dans lequel le moteur d'entraînement (240) transmet de la puissance au moyen de liaison de remorquage (220) au moyen d'un engrenage à vis sans fin (245) qui est couplé au manchon.

7. Ensemble de barre de remorquage mobile selon la revendication 6, dans lequel l'engrenage à vis sans fin (245) est disposé à l'intérieur d'une cavité interne qui est définie par des parois de la structure allongée formant châssis de support (210), l'engrenage à vis sans fin (245) étant étendu entre deux parties d'extrémité opposées de la structure allongée formant châssis de support (210).

8. Ensemble de barre de remorquage mobile selon la revendication 1 lorsqu'elle dépend de la revendication 6, dans lequel l'élément de coulissement (260) est couplé à l'engrenage à vis sans fin (245) afin de transférer l'entraînement depuis l'engrenage à vis sans fin (245) au bloc/à l'élément de coulissement (260).

9. Ensemble de barre de remorquage mobile selon la revendication 1, dans lequel des parois opposées du manchon (224) comprennent une pluralité de trous de boulon (223) qui correspondent aux trous de boulon (262) de l'élément de coulissement (260) pour recevoir lesdits boulons (228) et pour permettre le boulonnage du manchon (224) sur l'élément de coulissement (260) pendant utilisation.

10. Ensemble de barre de remorquage mobile selon l'une quelconque des revendications précédentes, dans lequel le moyen de liaison de remorquage (220) comprend en outre une partie de patte en forme de languette étendue vers l'extérieur (226) pour recevoir une boule de remorquage (227) dessus et dans lequel la partie de patte en forme de languette étendue vers l'extérieur (226) est de préférence soudée sur le manchon (224).

11. Ensemble de barre de remorquage mobile selon l'une quelconque des revendications précédentes, comprenant un agencement de blocage pour bloquer la position du moyen de liaison de remorquage (220) par rapport à la structure allongée formant châssis de support (210) au niveau d'une localisation prédéterminée, dans lequel l'agencement de blocage comprend une ou plusieurs broche(s) de blocage (292) qui est/sont adaptée(s) pour être reçue(s) à l'intérieur d'ouvertures de blocage respectives (293) qui sont ménagées le long d'une paroi externe de la structure allongée formant châssis de support (210) de telle sorte que, dans une position bloquée, les broches de blocage (292) soient reçues à l'intérieur d'ouvertures de blocage respectives (295) afin d'empêcher le mouvement du moyen de liaison de remorquage (220) par rapport à la structure allongée formant châssis de support (210).
